# EUROPÄISCHE PATENTANMELDUNG

(11) **EP 4 837 773 A1**
(43) Veröffentlichungstag der Anmeldung: **11.11.2026**
(21) Anmeldenummer: 26175350.3
(22) Anmeldetag: 29.04.2026
(51) Int. Cl.: B60L 53/16, B60L 53/18, H01R 13/633

(54) **LADESTECKER MIT EINEM LADESTECKERGRIFF**

(30) Priorität: 08.05.2025 DE 102025117784
(71) Anmelder: Amphenol Tuchel Industrial GmbH, 74080 Heilbronn (DE)
(72) Erfinder: GÖRL, Ann-Kathrin, 74251 Lehrensteinsfeld (DE)
(74) Vertreter: Staeger & Sperling Partnerschaftsgesellschaft mbB

(57) **Zusammenfassung**

Die Erfindung betrifft einen Ladestecker zur lösbaren, elektrisch leitenden Verbindung eines batterieelektrischen Fahrzeugs mit einer Ladestation, aufweisend ein Ladesteckergehäuse mit einer Steckachsenmittellinie und einen Ladesteckergriff, wobei der Ladesteckergriff und das Ladesteckergehäuse zusammengelegt sind, wobei der Ladesteckergriff wenigstens zweiteilig ist und aus wenigstens einer ersten und einer zweiten Ladegriffhälfte besteht.

## Beschreibung

Die Erfindung betrifft einen Ladestecker zur lösbaren, elektrisch leitenden Verbindung eines batterieelektrischen Fahrzeugs mit einer Ladestation, aufweisend ein Ladesteckergehäuse mit einer Steckachsenmittellinie und einen Ladesteckergriff, wobei der Ladesteckergriff und das Ladesteckergehäuse zusammengelegt sind.

Kontakte im Allgemeinen weisen wenigstens einen elektrisch leitfähigen Kontaktabschnitt zum lösbaren, temporären oder steckenden Verbinden mit einem korrespondierenden Gegenkontaktelement und einen an den Kontaktabschnitt anschließenden Schaftabschnitt zum Befestigen einer elektrischen Leitung an dem Kontakt auf. Ein solcher Kontakt, Steckkontakt, Hochstromkontakt kann an einem Ladestecker oder einer Ladebuchse, beispielsweise zum Aufladen eines elektrisch angetriebenen Fahrzeugs Verwendung finden. In diesem Fall ist ein Kabel einerseits an eine Ladestation angeschlossen und trägt andererseits ein Steckverbinderteil in Form eines Ladesteckers, der in ein zugeordnetes Gegensteckverbinderteil in Form einer Ladebuchse an einem Fahrzeug eingesteckt werden kann, um auf diese Weise eine elektrische Verbindung zwischen der Ladestation und dem Fahrzeug herzustellen.

An das Gehäuse von Ladesteckern und/oder dessen Innenteile können eine Vielzahl unterschiedlicher Anforderungen gestellt sein. Dies betrifft beispielsweise Schutz gegen äußere Einwirkungen, Abdichtungs- oder Entlüftungsmaßnahmen, Kühlung, systemabhängige geometrische Ausbildung und so weiter.

Das Anforderungskriterium der Kühlung entsteht durch den Zusammenhang, dass bei einem Ladevorgang von elektrischen Energiespeichern, Akkumulatoren Wärme entsteht infolge der hohen übertragenen elektrischen Leistungen, elektrischen Strömen nicht nur an dem Kabel, mit dem ein Ladestecker, beispielsweise mit einer Ladestation verbunden ist, sondern auch an dem Ladestecker und insbesondere innerhalb des Ladesteckers an Hochstromkontakten, über die ein elektrischer Kontakt mit zugeordneten Gegenkontakten auf Seiten einer Ladebuchse an einem Elektrofahrzeug hergestellt wird, wenn der Ladestecker in die Ladebuchse eingesteckt ist und die elektrische Leistung übertragen wird.

Versorgungs- und Ladeströme können grundsätzlich als Gleichströme oder als Wechselströme übertragen werden, wobei insbesondere Ladeströme und Hochstrombereiche in Form von Gleichstrom eine große Stromstärke, beispielsweise größer als 200 A oder sogar größer als 300 A oder gar 350 A aufweisen und zu einer Erwärmung des Kabels genauso wie eines mit dem Kabel verbundenen Hochstromkontaktes führen können.

Um batterieelektrisch angetriebene Lastkraftwagen schnell und effizient aufladen zu können sind in der Regel noch höhere elektrische Ladeleistungen erforderlich. Ein sogenannter Megawatt Charging System Standard (Abkürzung: MCS) soll als Schnellladesystem in der Zukunft Anwendung finden und soll eine Ladeleistung von bis zu 3,75 MW ermöglichen, wobei die Spannung bis zu 1.250 V und der Ladestrom bis zu 3.000 A aufweisen kann. Im Rahmen der angestrebten Elektromobilität sind hohe Ladeströme von besonderer Bedeutung. Nur auf diese Weise lassen sich Elektrofahrzeuge beziehungsweise dessen Energiespeicher in kurzer Zeit "auftanken".

Das Anforderungskriterium der geometrischen Ausbildung von Steckkontakten, Steckgesichtern in einem Ladestecker entsteht durch den Zusammenhang, dass es unterschiedliche Ladesteckerspezifikationen gibt. Beispielsweise definieren die Normen IEC 62196-2, IEC 62196-3, der CHAdeMO-Standard oder der Megawatt Charging System Standard unterschiedliche Ladesteckerstandards mit geometrisch variierenden Steckgesichtern und Kontaktelementen.

Das Anforderungskriterium der Abdichtung und Entlüftung von Ladesteckern ist ebenfalls besonders relevant bei höheren und hohen Ladeleistungen.

Eine weiteres funktionales Erfordernis von Ladesteckern kann sich durch die Notwendigkeit ergeben, dass eine Verriegelung in mechanischer Form umgesetzt werden muss, um zu verhindern, dass die lösbare, elektrisch leitende Verbindung, bestehend aus Ladestecker und Ladegegenstecker, im Fahrzeug nicht unbeabsichtigt oder während des Ladevorgangs getrennt werden.

Da es sich bei Ladesteckern beziehungsweise Ladesteckergehäusen um Massenartikel aus einem Kunststoffmaterial handelt, die in großen Stückzahlen herstellbar sein müssen, ist die wirtschaftliche Produktion derartiger Gehäuse eine weitere wichtige Anforderung. In der Praxis hat sich das Spritzguss-Herstellungsverfahren durchgesetzt, sodass die geometrische Gestaltung von Ladesteckergehäusen geeignet sein muss, mit dem Kunststoffspritzgussverfahren herstellbar zu sein.

Um die verschiedenen Anforderungskriterien jeweils für sich, teilweise oder insgesamt umzusetzen sind unterschiedliche, teils aufwändige Konstruktionen von Ladesteckern notwendig, die deren Abmessungen und das Eigengewicht teils erheblich erhöhen. Ebenfalls gewichtssteigernd können Zuleitungskabel ausgebildet sein, die insbesondere bei hohen elektrischen Ladeleistungen zusätzlich gekühlt und vergleichsweise biegesteif sind.

Um die Handhabbarkeit und das Zusammenstecken oder Trennen von Ladesteckern mit der Ladesteckerdose durch Bedienpersonen zu verbessern, ist es im Stand der Technik bekannt, dass derartige Ladestecker Handhabungshilfen in Form von Griffen aufweisen.

Beispielsweise zeigt die DE 10 2017 108 526 A1 einen Ladestecker für ein Kraftfahrzeug mit einem Anschlussmodul und mit einem Lastkontaktmodul, wobei das Anschlussmodul mit Versorgungsleitungen zur Leistungsversorgung verbindbar ist, wobei das Lastkontaktmodul einen Lastkontakt zur Übertragung einer Ladeleistung aufweist und wobei das Lastkontaktmodul lösbar und austauschbar an dem Anschlussmodul befestigt ist. Der Ladestecker verfügt über ein Ladesteckergehäuse, in dem die Module angeordnet sind und einen Ladesteckergriff als integraler Bestandteil des Ladesteckergehäuses vorgesehen ist. Dieser Griff ist zur Handhabung durch einen Benutzer derart angeordnet, dass er in Steckrichtung des Ladesteckergehäuses hinter den Steckkontakten des Steckgesichtes liegt und eine Griffposition für einen Einhandbedienung mit einer vertikalen Handflächenorientierung anbietet. Problematisch ist diese Gestaltung durch die hohen Handhabungskräfte, die ein Benutzer durch die Einhandbedienung und infolge der wirkenden Drehmomente durch die ungleichen Gewichtsverteilungen der Steckkontaktelemente und Zuleitungskabel aufbringen muss.

Eine zu der DE 10 2017 108 526 A1 ähnlich ausgeführte Ladesteckergehäusekonstruktion zeigt die EP 3 446 369 B1, sodass die Nachteile auch bei dieser Gestaltung bestehen.

Eine direkt in das Ladesteckergehäuse intergierte Griffanordnung zeigt die EP 4 509 348 A1. Dem Benutzer wird bei dieser Konstruktion ein Ladesteckergriff angeboten, der als in die Oberfläche des Ladesteckergehäuses integriertes Element ausgeführt ist und ein bereichsweises Umgreifen des Ladesteckergehäuses unterstützt. Problematisch ist bei dieser Lösung, dass diese Griffsituation hohe Handhabungskräfte erfordert, eine Beidhandbedienung schwierig realisierbar und die Grifffläche nicht für kleinere Benutzerhände geeignet ist.

Besonders relevant sind die Nachteile bestehender Ladesteckergehäusekonstruktionen mit Griffanordnungen bei Ladesteckern mit höheren Eigengewichten, größeren Steckkräften und/oder biegesteifen Zuleitungskabeln, weil dadurch die Handhabungskräfte und auftretenden Drehmomente durch ungleiche Lastverteilungen, bezogen auf den Griffbereich, nochmals erhöht werden. Höhere Ladesteckergewichte finden sich vor allem bei Ladesteckern für höhere zu übertragende elektrische Leistungen, wie beispielsweise CCS-Ladestecker (CCS = Combined Charging System; das Combined Charging System ist ein internationaler Standard des Charln-Konsortiums für den Anschluss von Elektroautos an Schnellladestationen) oder MCS-Ladestecker (MCS = Megawatt Charging System; das Megawatt Charging System ist ein Schnellladesystem für Elektrolastkraftwagen und elektrische Schwerlastfahrzeuge). Bei derartigen Ladesteckern können die Steckkräfte infolge der verwendeten zwei Gleichstrom-Steckkontakte ebenfalls erhöht sein, sodass die Handhabungskräfte nochmals steigen.

Es ist Aufgabe der Erfindung bestehende Ladestecker mit Ladesteckergriffen weiterzuentwickeln, sodass die zuvor genannten Nachteile des Standes der Technik wenigstens teilweise verringert und die kraftreduzierte Handhabung des Ladesteckers durch einen Benutzer unterstützt wird.

Zur Lösung der Aufgabe schlägt die Erfindung einen Ladestecker mit einem Ladesteckergehäuse vor, bei dem das Ladesteckergehäuse mit einem Ladesteckergriff als separates Bauteil zusammengelegt ist.

Die geometrische Konstruktion des Ladesteckergriffs weist eine ringförmige Struktur auf, welche vorzugsweise geschlossen ist. Der Querschnitt des Ladesteckergriffs ist wenigstens abschnittsweise kreis- oder ovalförmig. In den Abschnitten der ringförmigen Struktur des Ladesteckergriffs, welche sich in den Zusammenlegungsbereichen mit dem Ladesteckergehäuse befinden, kann der Querschnitt derart ausgebildet sein, dass eine Anlagefläche zwischen Ladesteckergriff und Ladesteckergehäuse gebildet ist.

Um den Ladesteckergriff und das Ladesteckergehäuse vorzugsweise lösbar zusammenzulegen ist vorgesehen, dass wenigstens ein Verbindungspunkt ausgebildet ist. Der Verbindungspunkt kann beispielsweise aus einer Schraubenverbindung bestehen, wobei der Ladesteckergriff eine geeignete Durchgangsbohrung aufweist und kompatibel zu dessen Positionierung in dem Steckverbindergehäuse ein Einschraubgewinde angeordnet ist, sodass Schraube eingedreht werden kann.

Um den Ladesteckergriff als Kunststoffspritzgussteil zu konstruieren sieht die Erfindung vor, dass in der umlaufenden ringförmigen Struktur und quer dazu eine Teilungsebene angeordnet ist, sodass der Ladesteckergriff wenigstens zweiteilig und an der Teilungsebene verbindbar ist. Vorzugsweise ist die Teilungsebene relativ zu dem wenigstens einen Verbindungspunkt des Ladesteckergriffes mit dem Ladesteckergehäuse ausgebildet, derart, dass die Teilungsebene parallel oder deckungsgleich zur Mittellinie des wenigstens einen Verbindungspunktes liegt.

Der Ladesteckergriff ist derart ausgestaltet, dass er in der mit dem Ladesteckergehäuse zusammengelegten Anordnungssituation zu der Steckachsenmittellinie geneigt ist. Die Neigung, das heißt der Winkel zwischen der Steckachsenmittellinie des Ladesteckergehäuses und der ringförmigen Längserstreckung beziehungsweise Teilungsebene des Ladesteckergriffes, wird dabei derart gewählt, dass der Benutzer bei der Handhabung ausreichend Grifffreiheit hat.

Um dem Benutzer des Ladesteckergriffes eine ergonomisch günstige Grifffläche zu bieten, sieht die Erfindung vor, dass Grifffläche eine Ausrichtung der Handfläche quer zur Steckachsenmittellinie des Ladesteckers erlaubt. Der Ladestecker kann optional zusätzlich zu dem Ladesteckergriff an seinem Ladesteckergehäuse eine Gehäusegrifffläche aufweisen, sodass dem Benutzer eine Zweihandbedienung bei der Handhabung des Ladesteckers ermöglicht wird und so die aufzuwendenden Handhabungskräfte an den einzelnen Greifbereichen weiter reduziert werden.

Die Erfindung wird im Folgenden anhand eines exemplarischen Ausführungsbeispiels in Verbindung mit den Figuren näher erläutert. Dabei zeigen:
- Fig. 1: die Vorderansicht des Ladesteckers mit Ladesteckergriff;
- Fig. 2: die Seitenansicht des Ladesteckers mit Ladesteckergriff;
- Fig. 3: die Vorderansicht des Ladesteckergriffes;
- Fig. 4: die Seitenansicht des Ladesteckergriffes in der geteilten Situation.

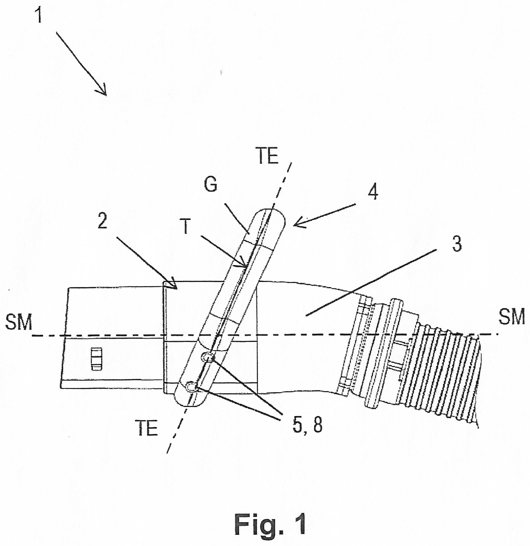

Fig. 1 zeigt die Vorderansicht des Ladesteckers 1 zusammengelegt mit dem Ladesteckergriff 4. Die Zusammenlegung erfolgt vorzugsweise lösbar durch wenigstens einen Verbindungspunkt 5. Im gezeigten Ausführungsbeispiel sind in der Vorderansicht des Ladesteckers 1 in dem Ladesteckergriff 4 zwei Verbindungspunkte 5 vorgesehen, auf der gegenüberliegenden Seite der Vorderansicht zwei weitere Verbindungspunkte 5 (nicht dargestellt). Einschraubkompatibel zu den Verbindungspunkten 5 des Ladesteckergriffes 4 sind innerhalb des Ladesteckergehäuses 2 Einschraubgewinde 8 angeordnet.

Der Ladesteckergriff 4 wird derart relativ zu dem Ladesteckergehäuse 2 des Ladesteckers 1 positioniert und zusammengelegt, dass die Steckachsenmittellinie SM des Ladesteckers 1 und Teilungsebenenerstreckung TE der Teilungsebene T des Ladesteckergriffes 4 einen Neigungswinkel NW zueinander aufweisen, welcher derart gewählt wird, sodass der Benutzer bei der Handhabung ausreichend Grifffreiheit hat. Die Orthogonale der Teilungsebene T weist einen Winkel zu der Steckachsenmittellinie SM auf, der dem Neigungswinkels NW plus dem Betrag des rechten Winkels entspricht.

Zusätzlich zu der Grifffläche G des Ladesteckergriffes 4 kann das Ladesteckergehäuse 2 des Ladesteckers 1 eine Ladesteckergehäusegrifffläche 3 aufweisen, sodass die Beidhandbedienung durch einen Benutzer unterstützt wird.

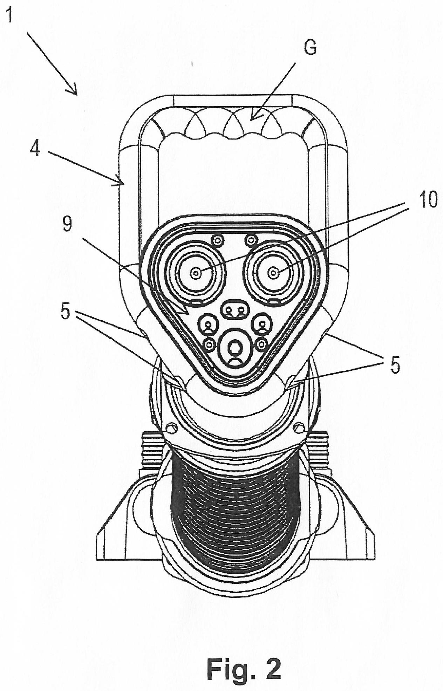

Fig. 2 umfasst die Seitenansicht des Ladesteckers 1 mit Ladesteckergriff 4. Die Seitenansicht zeigt die Blickrichtung auf das Steckgesicht 9 und die ringförmige Struktur des Ladesteckergriffes 4. Die Grifffläche G des Ladesteckergriffes 4 sowohl quer zur Steckachsenmittellinie SM als auch weitgehend achsparallel zu der Verbindungslinie (nicht dargestellt) der Steckkontaktelemente 10 angeordnet. In der gezeigten Lage des Ladesteckers 1 ist somit die Grifffläche G für ein Zugreifen des Benutzers mit einer horizontal ausgerichteten Handfläche unterstützt. Gleichzeitig wird durch die Positionierung der Grifffläche G die vom Benutzer aufzubringende Handhabungskraft für das Eigengewicht des Ladesteckers 1 reduziert.

Vorzugsweise ist der Ladestecker 1 konzipiert für die Übertragung höherer elektrischer Leistungen wie beispielsweise ein CCS- oder MCS-Ladestecker, weil hier das Eigengewicht des Ladesteckers 1 und/oder die Steckkräfte häufig erhöht sind und einen gesteigerten Kraftaufwand des Benutzers erfordern. Die Steckkontaktelemente 10 können Gleichstrom-Steckkontaktelemente sein.

Der Querschnitt des Ladesteckergriffs 4 ist wenigstens abschnittsweise kreis- oder ovalförmig und kann im Bereich der Grifffläche G Ausnehmungen für die Finger eines Benutzers aufweisen. Vorzugsweise ist der Abschnitt der ringförmigen Struktur des Ladesteckergriffs 4, der sich in den Zusammenlegungsbereichen mit dem Ladesteckergehäuse 2 befindet, in seinem Querschnitt derart ausgebildet, dass eine Anlagefläche 6 zwischen Ladesteckergriff 4 und Ladesteckergehäuse 2 gebildet ist.

Sowohl der Abschnitt des Zusammenlegungsbereiches von Ladesteckergriff 4 und Ladesteckergehäuse 2 als auch der wenigstens eine Verbindungspunkt 5 sind in Bereichen der ringförmigen Struktur des Ladesteckergriffs 4 gegenüber der Grifffläche G angeordnet. Auf diese Weise entsteht durch die Handhabungskraft eines Benutzers ein auf den Ladestecker 1 wirkendes Drehmoment, dass durch den Ladesteckergriff 4 im Zusammenlegungsbereich in den Ladestecker 1 eingeleitet wird und die aufgebrachten Handhabungskräfte für das Stecken und Trennen der Steckkontaktelemente 10 verstärkt.

Im gezeigten Ausführungsbeispiel der Fig. 2 sind exemplarisch vier Verbindungspunkte 5 mit jeweils paarweisem Versatz zueinander vorgesehen, sodass die Verbindungs- und Drehmomentkräfte in den Zusammenlegungsbereich eingeleitet und verteilt sind.

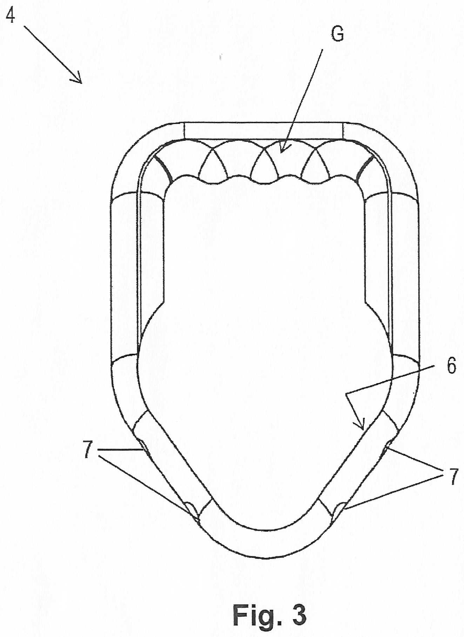

Fig. 3 zeigt die Vorderansicht des Ladesteckergriffes 4 als separates Einzelteil. Die Verbindungspunkte 5 in dem Ladesteckergriff 4 sind umgesetzt durch Buchsen 7, durch die jeweils eine Befestigungsschraube hindurchgesteckt und in das Einschraubgewinde 8 des Ladesteckergehäuses 2 eingeschraubt werden kann.

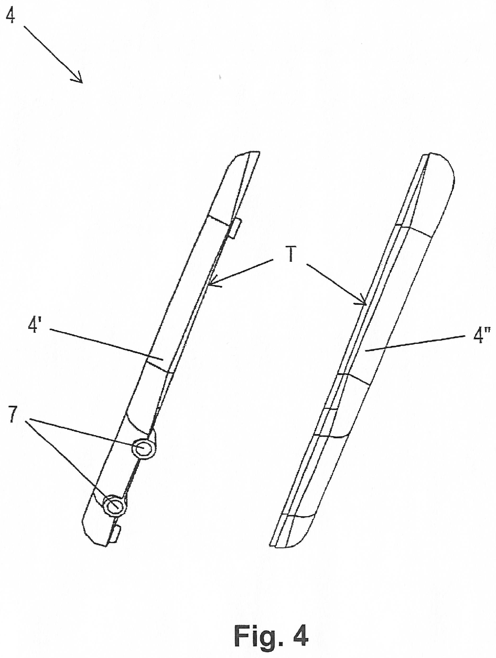

Fig. 4 umfasst die Seitenansicht des Ladesteckergriffes 4 in der geteilten Situation der ringförmig umlaufenden Struktur in einer Teilungsebene T. Der in seiner Teilungsebene T zweigeteilte Ladesteckergriff 4 ermöglicht dessen Herstellung in einem Kunststoffspritzgussverfahren, ohne das Materialeinsparungen und aufwändige Hinterschnitte realisiert werden müssen. Dadurch ist eine weitgehend geschlossene, gleichmäßige Oberfläche der ringförmigen Struktur möglich, die bei reduziertem Materialeinsatz hohe Festigkeit bietet.

Die beiden Ladesteckergriffhälften 4', 4" des Ladesteckergriffes 4 sind in ihrer Teilungsebene T durch eine aufeinander abgestimmte Teilungskontur zusammenlegbar und können zur gegenseitigen Fixierung verschraubt werden (nicht dargestellt). Die Teilungskonturen können einen oder mehrere, ineinandergreifende Absätze aufweisen, sodass die relative Lage Ladesteckergriffhälften 4', 4" definiert und die Festigkeit der Anordnung nochmals erhöht ist.

Die Buchsen 7 können angrenzend zu der Teilungsebene T in einer der beiden Ladesteckergriffhälften 4', 4" angeordnet sein. Gleichfalls ist die Positionierung der Buchsen 7 in beiden Ladesteckergriffhälften 4', 4" möglich.

### Bezugszeichenliste

- 1: Ladestecker
- 2: Ladesteckergehäuse
- 3: Ladesteckergehäusegrifffläche
- 4: Ladesteckergriff
- 4': Ladesteckergriffhälfte
- 4": Ladesteckergriffhälfte
- 5: Verbindungspunkt
- 6: Anlagefläche (des Ladesteckergriffes)
- 7: Buchse (im Ladesteckergriff)
- 8: Einschraubgewinde (im Ladesteckergehäuse)
- 9: Steckgesicht
- 10: Steckkontaktelement

- G: Grifffläche
- NW: Neigungswinkel
- SM: Steckachsenmittellinie (des Ladesteckergehäuses)
- T: Teilungsebene
- TE: Teilungsebenenerstreckung

## Patentansprüche

1. Ladestecker (1) zur lösbaren, elektrisch leitenden Verbindung eines batterieelektrischen Fahrzeugs mit einer Ladestation, aufweisend ein Ladesteckergehäuse (2) mit einer Steckachsenmittellinie SM und einen Ladesteckergriff (4), wobei der Ladesteckergriff (4) und das Ladesteckergehäuse (2) zusammengelegt sind, **dadurch gekennzeichnet, dass** der Ladesteckergriff (4) wenigstens zweiteilig ist und aus wenigstens einer ersten und einer zweiten Ladesteckergriffhälfte (4', 4") besteht.

2. Ladestecker (1) gemäß Anspruch 1, **dadurch gekennzeichnet, dass** der wenigstens zweiteilige Ladesteckergriff (4, 4', 4") in einer Teilungsebene T geteilt ist, die in einer Teilungsebenenerstreckung TE liegt.

3. Ladestecker (1) gemäß Anspruch 1, **dadurch gekennzeichnet, dass** der wenigstens zweiteilige Ladesteckergriff (4, 4', 4") eine ringförmige Struktur aufweist.

4. Ladestecker (1) gemäß Anspruch 2, **dadurch gekennzeichnet, dass** der wenigstens zweiteilige Ladesteckergriff (4, 4', 4") mit dem Ladesteckergehäuse (2) derart zusammengelegt ist, dass die Steckachsenmittellinie SM des Ladesteckers (1) und Teilungsebenenerstreckung TE der Teilungsebene T des Ladesteckergriffes (4, 4', 4") einen Neigungswinkel NW zueinander aufweisen.

5. Ladestecker (1) gemäß Anspruch 4, **dadurch gekennzeichnet, dass** die Orthogonale der Teilungsebene T einen Winkel zu der Steckachsenmittellinie SM aufweist, der dem Neigungswinkels NW plus dem Betrag des rechten Winkels entspricht.

6. Ladestecker (1) gemäß Anspruch 1, **dadurch gekennzeichnet, dass** der wenigstens zweiteilige Ladesteckergriff (4, 4', 4") zu dem Ladesteckergehäuse (2) wenigstens bereichsweise eine Anlagefläche (6) aufweist.

7. Ladestecker (1) gemäß Anspruch 1, **dadurch gekennzeichnet, dass** der wenigstens zweiteilige Ladesteckergriff (4, 4', 4") mit dem Ladesteckergehäuse (2) durch wenigstens einen Verbindungspunkt (5) lösbar verbunden ist.

8. Ladestecker (1) gemäß Anspruch 1, **dadurch gekennzeichnet, dass** der wenigstens eine Verbindungspunkt (5) durch eine Buchse (7) im wenigstens zweiteiligen Ladesteckergriff (4, 4', 4") und ein Einschraubgewinde (8) in dem Ladesteckergehäuse (2) gebildet ist.

9. Ladestecker (1) gemäß Anspruch 1, **dadurch gekennzeichnet, dass** der wenigstens zweiteilige Ladesteckergriff (4, 4', 4") eine Grifffläche G aufweist und das Ladesteckergehäuse (2) eine Ladesteckergehäusegrifffläche (3) aufweist, sodass eine Zweihandbedienung unterstützt ist.

10. Ladestecker (1) gemäß Anspruch 1, **dadurch gekennzeichnet, dass** der Ladestecker (1) ein CCS-Ladestecker oder ein MCS-Ladestecker ist, aufweisend Steckkontaktelemente (10), ausgebildet als Gleichstrom-Steckkontaktelemente.
